# EUROPEAN PATENT SPECIFICATION

(11) **EP 3 033 597 B1**
(45) Date of publication and mention of the grant of the patent: **01.05.2019**
(21) Application number: 15701844.1
(22) Date of filing: 14.01.2015
(51) Int. Cl.: G01F 11/02, F16J 15/32, F04B 13/00, F04B 15/02, F16J 15/3236, F16J 1/00, F16J 15/56

(54) **DOSING PISTON**
DOSIERKOLBEN
PISTON DE DOSAGE

(30) Priority: 19.02.2014 IT MI20140239
(43) Date of publication of application: 22.06.2016
(73) Proprietor: A.T.P. S.p.A., 41100 Modena (IT)
(72) Inventor: ZACCHE', Vanni, I-41100 Modena (IT)
(74) Representative: Long, Giorgio
(86) International application number: PCT/IB2015/050269
(87) International publication number: WO 2015/125032

(56) References cited:
- GB-A- 2 194 298
- US-A- 3 909 016
- US-A- 4 709 932
- US-A- 4 819 952
- US-A1- 2005 212 218
- US-A1- 2005 263 002

## Description

The present invention relates to a piston for food product dosing devices, applicable particularly, but not limited to, the field of liquid and semi-liquid dairy products, such as, for example, milk and yogurt.

The packaging of food products in general involves several issues. In addition to the need to ensure a precise and repeatable dosing, one of the most felt problems is to ensure a high level of asepticity to the working environment. This can be achieved only if the several parts composing the system, particularly the dosing device directly contacting the food, can be suitably periodically hygienized during maintenance interventions.

In addition, if the packaging relates to liquid or semi-liquid products, such as milk and yogurt, the sealing of the piston-cylinder assembly of the dispensing device is another extremely important element. In fact, the poor sealing leads to the deposition of food residues in the inner recesses of the device, with consequent bacterial pollution risk. This makes the hygienization intervention still more troublesome. Document US20050263002 addresses the problem of dosing under strict hygiene criteria and discloses a dosing piston made of few parts, easy to clean and assemble.

No dosing devices of the prior art are optimal in addressing all the problems set forth above.

The problem addressed by the present invention is to provide an integral dosing piston for a food product dosing device which solves the drawbacks of the prior art.

Such a problem is solved by an integral dosing piston for a food product dosing device as set forth in the appended claims, the definitions of which are an integral part of the present disclosure.

Therefore, an object of the invention is an integral dosing piston for a food product dosing device, which ensures a high precision and repeatability of the dispensed dose of food product.

A further object of the invention is an integral dosing piston for a food product dosing device, which ensures a high sealing against leakages through the dosing cylinder.

A still another object of the invention is an integral dosing piston for a food product dosing device, which allows an easy and efficient hygienization.

Further characteristics and advantages of the present invention will be more apparent from the description of some embodiment examples, given herein below by way of illustrative, non-limiting example, with reference to the following figures:
Fig. 1 represents a longitudinal sectional view of an integral piston according to the present invention;
Fig. 2 represents a sectional view of a detail of the integral piston of the invention according to an embodiment;
Fig. 3 represents a perspective view of a part of the integral piston of Fig. 1.

With reference to the figures, the integral dosing piston for a food product dosing device, generally indicated with the number 1, comprises an inner body 2, an outer head member 3, and a position abutment member 4.

The inner body 2, made of a substantially rigid material, is in a substantially cylindrical shape and comprises a side surface 5 and a head surface 6.

The head surface 6 has a relief central portion 7 and a contour portion 8. A step is thus formed between the central portion 7 and the contour portion 8.

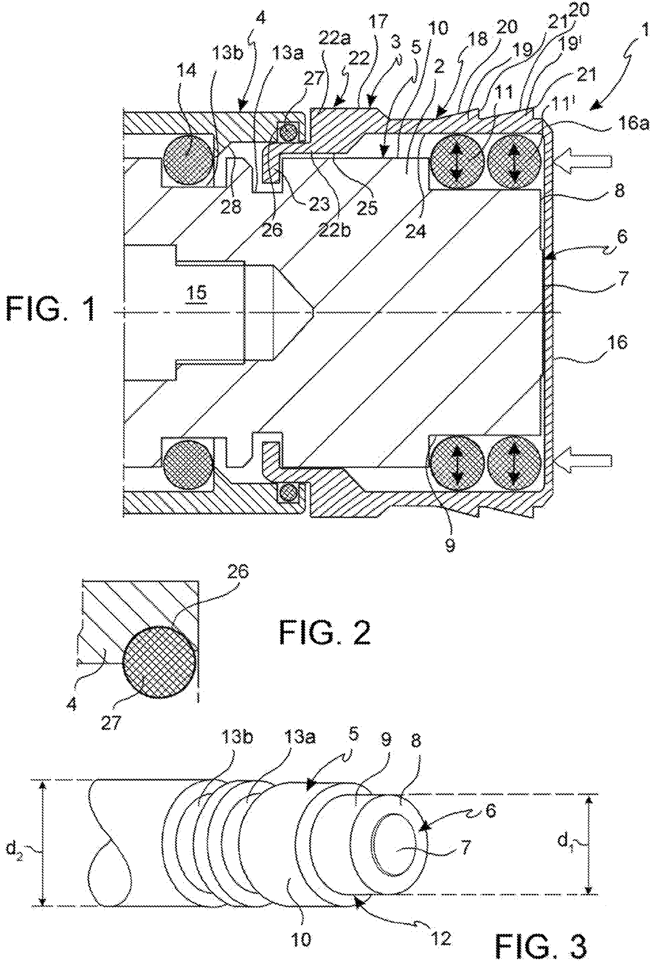

The side surface 5 has a front portion 9, which is proximal to the head surface 6, having a first diameter d1, and a rear portion 10 having a second diameter d2, wherein the diameter d1 is less than the diameter d2. A step 12 is thus formed between the front portion 9 and the rear portion 10, which composes a seat for at least one, preferably two, elastic rings 11, 11' (Fig. 1).

In a more retracted position with respect to the step 12, the side surface 5 comprises, in the order moving away from the step 12, a first annular recess 13a and a second annular recess 13b. The second annular recess 13b composes the seat for a gasket ring 14.

The inner body 2 comprises coaxially a hole 15, typically a threaded hole, for securing the piston 1 to the actuator member of a dosing system.

The outer head member 3 comprises, in turn, a head portion 16 and a mantle 17.

In preferred embodiments, the connecting corner 16a between the head portion 16 and the mantle 17 is beveled (Fig. 1).

In preferred embodiments, the head portion 16 is planar.

The mantle 17 comprises a front portion 18 and a rear portion 22.

Two annular ridges 19, 19' are arranged on the front portion 18, which ensure the interference seal against the surface of the cylinder (not shown) in which the piston 1 operates. The annular ridges 19, 19' have a sectional profile having the side 20 facing inwardly inclined and the side 21 facing outwardly substantially perpendicular to the mantle 17 surface.

The rear portion 22 comprises a first relief length 22a, which is flush with the annular ridges 19, 19' and diametrically calibrated to act as a guide for such annular ridges, and a second length 22b forming a step with the first relief length 22a and has a profile facing downwardly, so as to form a snap-fitting profile 23 intended to interfere with the first annular recess 13a of the inner body 2. In this manner, it is possible to create a biunivocal position abutment between the outer head member 3 and the inner body 2.

The inner surface of the mantle 17, i.e., the one facing the inner body 2, has a front portion 24 and a rear portion 25, wherein the rear portion 25 has a diameter substantially corresponding to the diameter of the rear portion 10 of the inner body 2. Vice versa, the front portion 24 of the inner surface of the mantle 17 has a larger diameter, so as to create a gap so that the elastic rings 11, 11' insist simultaneously on both the surface of the step 12 and the inner surface of the mantle 17.

The position abutment member 4 has a portion that is proximal to the mantle 17 and a distal portion (not visible in the drawing), which is secured to the actuator member of the dosing system. The proximal portion has an inner surface with a diameter substantially corresponding to the outer diameter of the second length 22b of the rear portion 22 of the mantle 17.

On the inner surface of the proximal portion of the position abutment member 4, in the order starting from the end of said proximal portion, a seat 26 for a gasket ring 27 and a tooth 28 engaging with the second annular recess 13b of the inner body 2 are arranged.

In a preferred embodiment, shown in Fig. 2, the seat 26 has a coupling geometry with the gasket ring 27, i.e., it has an arc-of-a-circle-shaped profile, so as to avoid straight-angled profiles. This type of geometry, which in the technical jargon is referred to as "3A cavity", allows avoiding the product buildup which can possibly penetrate the seat, if for any reasons the sealing of the mantle 17 against the corresponding cylinder has failed. In this manner, the washing and hygienization of the piston 1 is facilitated.

As stated above, the inner body 2 is made of a substantially rigid material. In preferred embodiments, by the term "substantially rigid material" is meant a material having an elastic module E (Young's module) ≥2000 MPa, as determined according to the method ASTM D790. More preferably, such material will be a plastic with a module E ≥2000 MPa.

Vice versa, the material of which the outer head member 3 is made is a medium rigidity material. In preferred embodiments, by the term "medium rigidity material" is meant a material having an elastic module E ranging between 50 and 1000 MPa. More preferably, such material is selected from plastic materials, such as, for example, polytetrafluoroethylene (PTFE), polyethylene (PE), and polyurethanes (PU). PTFE is particularly preferred by virtue of its reduced friction properties.

Instead, the elastic rings 11, 11' and the constraint rings 14, 27 are made of a flexible material. In preferred embodiments, by the term "flexible material" is meant a material having a hardness Shore A 40-70, as determined by the method ISO 868. Preferably, such material will be a silicone elastomer.

The position abutment member 4 is also made of a substantially rigid material. In preferred embodiments, by the term "substantially rigid material" is meant a material having a module E ≥2000 MPa. More preferably, such material will be a plastic material with a module E ≥2000 MPa.

The piston 1 according to the invention is auto-adaptive, since it increases the sealing strength as the pressure to which the head portion 16 of the outer head member 3 is subjected increases. In fact, as shown by the arrows in Fig. 1, an overpressure onto the surface of the head portion 16 results in a compression of the elastic rings 11, 11', which consequently deform by elongating in the radial direction. In this manner, the elastic rings 11, 11' exert a pressure onto the inner surface 24 of the outer head member 3 which causes the radial expansion of the mantle 17 and thus a higher sealing pressure of the annular ridges 19, 19' onto the surface of the dosing cylinder. This change in the piston geometry, which is allowed by the configuration of the head surface 6 of the inner body 2 which provides for a relief central portion 7 with respect to the contour portion 8, results in a self-adaptation of the seal of the piston 1 following an increase in the axial pressure onto the piston itself without perceivably altering the head volume of the cylinder, i.e., the volume determining the amount of product to be dosed. In this manner, the dosing of the product is always precise and repeatable.

Therefore, the piston 1 according to the invention efficiently addressed the needs of the dosing in particular of food products.

As stated above, the above-described self-adaptive system allows keeping the head volume of the cylinder of the dosing pump substantially unaltered, allowing a precise dosing. At the same time, the fact that the higher sealing pressure against the cylinder is obtained only as the pressure to which the piston is subjected increases, creates a lesser wear of the mantle 17 with respect to the prior art pistons, which provide for a radially pre-loaded system.

Therefore, the piston of the invention achieves an optimal sealing in all situations.

Furthermore, the snap-anchoring system between the mantle 17 and the position abutment member 4, having a simplified geometry and the substantial absence of undercut profiles, is simpler and easier to be hygienized than the conventional pistons, which provide for couplings which can be difficult to be sanitized.

It is apparent that only some particular embodiments of the present invention have been described, to which those skilled in the art will be able to make all the modifications that are necessary of the adaptation thereof to particular applications, without anyhow departing from the protection scope of the present invention.

## Claims

1. A dosing piston (1) for a dosing device, particularly for food products, comprising an inner body (2), an outer head member (3), and a position abutment member (4) of the outer head member (3), wherein the inner body (2) comprises a side surface (5) and a head surface (6), wherein the side surface (5) has a front portion (9), which is proximal to the head surface (6), having a first diameter (d1), and a rear portion (10) having a second diameter (d2), wherein the first diameter (d1) is less than the second diameter (d2), and wherein a step (12) is formed between the front portion (9) and the rear portion (10), which composes a seat for at least one elastic ring (11, 11'), wherein the outer head member (3) comprises a head portion (16) and a mantle (17), wherein the mantle (17) comprises a front portion (18) and a rear portion (22) and wherein at least one annular ridge (19, 19') is arranged on the front portion (18), **characterized in that** the head surface (6) has a relief central portion (7) and a contour portion (8), a step being formed between the central portion (7) and the contour portion (8).

2. The dosing piston (1) according to claim 1, wherein two elastic rings (11, 11') are arranged in the seat composed by step (12).

3. The dosing piston (1) according to claim 2, wherein the side surface (5) comprises, in the order moving away from the step (12), a first annular recess (13a) and a second annular recess (13b), wherein the second annular recess (13b) composes a seat for a gasket ring (14).

4. The dosing piston (1) according to any of the claims 1 to 3, wherein two annular ridges (19, 19') are arranged on the front portion (18).

5. The dosing piston (1) according to claim 4, wherein the annular ridges (19, 19') have a sectional profile that has a side (20) facing inwardly inclined and a side (21) facing outwardly substantially perpendicular to the surface of the mantle (17).

6. The dosing piston (1) according to claim 4 or 5, wherein the head portion (16) is planar.

7. The dosing piston (1) according to any of the claims 4 to 6, wherein a connection corner (16a) between the head portion (16) and the mantle (17) is beveled.

8. The dosing piston (1) according to any of the claims 4 to 7, when depending on claim 3, wherein the rear portion (22) of the mantle (17) comprises a first relief length (22a) diametrically calibrated to act as a guide to the annular ridges (19, 19'), and a second length (22b) forming a step with the first relief length (22a) and it has a profile facing downwardly so as to form a snap-fitting profile (23) intended to interfere with the first annular recess (13a) of the inner body (2).

9. The dosing piston (1) according to any of the claims 4 to 8, when depending on claim 2, wherein the inner surface of the mantle (17) facing the inner body (2) has a front portion (24) and a rear portion (25), wherein the rear portion (25) has a diameter substantially corresponding to the diameter of the rear portion (10) of the inner body (2), while the front portion (24) has a larger diameter, so as to create a gap so that the elastic rings (11, 11') simultaneously insist on both the surface of the step (12) and the inner surface of the mantle (17).

10. The dosing piston (1) according to claim 8, wherein the position abutment member (4) has a portion proximal to the mantle (17) and a distal portion, wherein the proximal portion has an inner surface with a diameter substantially corresponding to the outer diameter of the second length (22b) of the rear portion (22) of the mantle (17).

11. The dosing piston (1) according to claim 10, wherein, on the inner surface of the proximal portion of the position abutment member (4), in the order starting from the end of said proximal portion, a seat (26) for a gasket ring (27) and an engaging tooth (28) with the second annular recess (13b) of the inner body (2) are arranged.

12. The dosing piston (1) according to claim 11, wherein the seat (26) has a coupling geometry with the gasket ring (27) with an arc-of-a-circle-shaped profile.

13. The dosing piston (1) according to any of the claims 1 to 12, wherein the inner body (2) is made of a material having a module E ≥2000 MPa.

14. The dosing piston (1) according to any of the claims 1 to 13, wherein the position abutment member (4) is made of a material having a module E ≥2000 MPa.

15. The dosing piston (1) according to any of the claims 1 to 14, wherein the outer head member (3) is made of a material having a module E ranging between 50 and 1000 MPa, preferably selected from plastic materials such as polytetrafluoroethylene (PTFE), polyethylene (PE), and polyurethanes (PU).

16. The dosing piston (1) according to any of the claims 1 to 15, wherein the elastic rings (11, 11') and the gasket rings (14, 27) are made of a flexible material, preferably a material having a Shore A hardness of 40-70.

17. The dosing piston (1) according to claim 16, wherein such flexible material is a silicone elastomer.

18. A dosing system, in particular for food products such as liquid or semi-liquid dairy products, comprising a dosing piston (1) according to any of the claims 1 to 17.

## Patentansprüche

1. Dosierkolben (1) für eine Dosierungsvorrichtung, insbesondere für Lebensmittelprodukte, umfassend einen inneren Körper (2), ein äußeres Kopfelement (3) und ein Positionsanlageelement (4) des äußeren Kopfelements (3), wobei der innere Körper (2) eine Seitenfläche (5) und eine Kopffläche (6) umfasst, wobei die Seitenfläche (5) einen vorderen Abschnitt (9) aufweist, welcher zu der Kopffläche (6) proximal ist, einen ersten Durchmesser (d1) aufweisend, und einen hinteren Abschnitt (10), welcher einen zweiten Durchmesser (d2) aufweist, wobei der erste Durchmesser (d1) geringer ist als der zweite Durchmesser (d2), und wobei eine Stufe (12) zwischen dem vorderen Abschnitt (9) und dem hinteren Abschnitt (10) gebildet ist, welcher einen Sitz für wenigstens einen elastischen Ring (11, 11') bildet, wobei das äußere Kopfelement (3) einen Kopfabschnitt (16) und einen Mantel (17) umfasst, wobei der Mantel (17) einen vorderen Abschnitt (18) und einen hinteren Abschnitt (22) umfasst, und wobei wenigstens eine ringförmige Rippe (19, 19') an dem vorderen Abschnitt (18) angeordnet ist, **dadurch gekennzeichnet, dass** die Kopffläche (6) einen zentralen Reliefabschnitt (7) und einen Konturabschnitt (8) aufweist, wobei eine Stufe zwischen dem zentralen Abschnitt (7) und dem Konturabschnitt (8) gebildet ist.

2. Dosierkolben (1) nach Anspruch 1, wobei zwei elastische Ringe (11, 11') in dem Sitz angeordnet sind, welcher durch die Stufe (12) gebildet ist.

3. Dosierkolben (1) nach Anspruch 2, wobei die Seitenfläche (5), um sich von der Stufe (12) weg zu bewegen, eine erste ringförmige Ausnehmung (13a) und eine zweite ringförmige Ausnehmung (13b) umfasst, wobei die zweite ringförmige Ausnehmung (13b) einen Sitz für einen Dichtungsring (14) bildet.

4. Dosierkolben (1) nach einem der Ansprüche 1 bis 3, wobei zwei ringförmige Rippen (19, 19') an dem vorderen Abschnitt (18) angeordnet sind.

5. Dosierkolben (1) nach Anspruch 4, wobei die ringförmigen Rippen (19, 19') ein Querschnittsprofil aufweisen, welches eine Seite (20), welche nach innen weisend geneigt ist, und eine Seite (21) aufweist, welche im Wesentlichen rechtwinklig zu der Fläche des Mantels (17) nach außen weist.

6. Dosierkolben (1) nach Anspruch 4 oder 5, wobei der Kopfabschnitt (16) eben ist.

7. Dosierkolben (1) nach einem der Ansprüche 4 bis 6, wobei eine Verbindungsecke (16a) zwischen dem Kopfabschnitt (16) und dem Mantel (17) angefast ist.

8. Dosierkolben (1) nach einem der Ansprüche 4 bis 7, wenn abhängig von Anspruch 3, wobei der hintere Abschnitt (22) des Mantels (17) eine erste Relieflänge (22a), welche diametral kalibriert ist, um als eine Führung für die ringförmigen Rippen (19, 19') zu wirken, und eine zweite Länge (22b) umfasst, welche eine Stufe mit der ersten Relieflänge (22a) bildet, und er ein Profil aufweist, welches nach unten weist, um ein Schnappeingriff-Profil (23) zu bilden, welches dazu bestimmt ist, mit der ersten ringförmigen Ausnehmung (13a) des inneren Körpers (2) wechselzuwirken.

9. Dosierkolben (1) nach einem der Ansprüche 4 bis 8, wenn abhängig von Anspruch 2, wobei die innere Fläche des Mantels (17), welche zu dem inneren Körper (2) weist, einen vorderen Abschnitt (24) und einen hinteren Abschnitt (25) aufweist, wobei der hintere Abschnitt (25) einen Durchmesser aufweist, welcher im Wesentlichen dem Durchmesser des hinteren Abschnitts (10) des inneren Körpers (2) entspricht, wobei der vordere Abschnitt (24) einen größeren Durchmesser aufweist, um einen Spalt zu erzeugen, so dass die elastischen Ringe (11, 11') gleichzeitig auf sowohl die Fläche der Stufe (12) als auch die innere Fläche des Mantels (17) einwirken.

10. Dosierkolben (1) nach Anspruch 8, wobei das Positionsanlageelement (4) einen Abschnitt, welcher dem Mantel (17) proximal ist, und einen distalen Abschnitt aufweist, wobei der proximale Abschnitt eine innere Fläche mit einem Durchmesser aufweist, welcher im Wesentlichen dem äußeren Durchmesser der zweiten Länge (22b) des hinteren Abschnitts (22) des Mantels (17) entspricht.

11. Dosierkolben (1) nach Anspruch 10, wobei an der inneren Fläche des proximalen Abschnitts des Positionsanlageelements (4), in der Reihenfolge beginnend von dem Ende des proximalen Abschnitts, ein Sitz (26) für einen Dichtungsring (27) und ein Eingriffszahn (28) mit der zweiten ringförmigen Ausnehmung (13b) des inneren Körpers (2) angeordnet sind.

12. Dosierkolben (1) nach Anspruch 11, wobei der Sitz (26) eine Kopplungsgeometrie mit dem Dichtungsring (27) mit einem kreisbogenförmigen Profil aufweist.

13. Dosierkolben (1) nach einem der Ansprüche 1 bis 12, wobei der innere Körper (2) aus einem Material hergestellt ist, welches ein Modul E ≥ 2000 MPa aufweist.

14. Dosierkolben (1) nach einem der Ansprüche 1 bis 13, wobei das Positionsanlageelement (4) aus einem Material hergestellt ist, welches ein Modul E ≥ 2000 MPa aufweist.

15. Dosierkolben (1) nach einem der Ansprüche 1 bis 14, wobei das äußere Kopfelement (3) aus einem Material hergestellt ist, welches ein Modul E aufweist, welches sich zwischen 50 und 1000 MPa befindet, vorzugsweise ausgewählt aus Kunststoffmaterialien, wie beispielsweise Ploytetrafluoroethylen (PTFE), Polyethylen (PE) und Polyurethanen (PU).

16. Dosierkolben (1) nach einem der Ansprüche 1 bis 15, wobei die elastischen Ringe (11, 11') und die Dichtungsringe (14, 27) aus einem flexiblen Material hergestellt sind, vorzugsweise einem Material, welches eine Shore A Härte von 40-70 aufweist.

17. Dosierkolben (1) nach Anspruch 16, wobei ein derartiges flexibles Material ein Silikonelastomer ist.

18. Dosiersystem, insbesondere für Lebensmittelprodukte, wie beispielsweise flüssige oder halbflüssige Milchprodukte, umfassend einen Dosierkolben (1) nach einem der Ansprüche 1 bis 17.

## Revendications

1. Piston de dosage (1) pour un dispositif de dosage, en particulier pour des produits alimentaires, comprenant un corps interne (2), un élément de tête externe (3) et un élément de butée en position (4) de l'élément de tête externe (3), dans lequel le corps interne (2) comprend une surface latérale (5) et une surface de tête (6), dans lequel la surface latérale (5) comprend une partie avant (9), qui est proximale à la surface de tête (6), ayant un premier diamètre (d1), et une partie arrière (10) ayant un second diamètre (d2), dans lequel le premier diamètre (d1) est inférieur au second diamètre (d2), et dans lequel une marche (12) est formée entre la partie avant (9) et la partie arrière (10), qui constitue un logement pour au moins une bague élastique (11, 11'), dans lequel l'élément de tête externe (3) comprend une partie de tête (16) et une enveloppe (17), dans lequel l'enveloppe (17) comprend une partie avant (18) et une partie arrière (22) et dans lequel au moins une arête annulaire (19, 19') est agencée sur la partie avant (18), **caractérisé en ce que** la surface de tête (6) comprend une partie centrale (7) en relief et une partie de contour (8), une marche étant formée entre la partie centrale (7) et la partie de contour (8).

2. Piston de dosage (1) selon la revendication 1, dans lequel deux bagues élastiques (11, 11') sont agencées dans le logement constitué par la marche (12).

3. Piston de dosage (1) selon la revendication 2, dans lequel la surface latérale (5) comprend, dans l'ordre en s'éloignant de la marche (12), un premier évidement annulaire (13a) et un second évidement annulaire (13b), dans lequel le second évidement annulaire (13b) constitue un logement pour une bague d'étanchéité (14).

4. Piston de dosage (1) selon l'une quelconque des revendications 1 à 3, dans lequel deux arêtes annulaires (19, 19') sont agencées sur la partie avant (18).

5. Piston de dosage (1) selon la revendication 4, dans lequel les arêtes annulaires (19, 19') ont un profil de section qui a un côté (20) incliné orienté vers l'intérieur et un côté (21) orienté vers l'extérieur sensiblement perpendiculaire à la surface de l'enveloppe (17).

6. Piston de dosage (1) selon la revendication 4 ou 5, dans lequel la partie de tête (16) est plane.

7. Piston de dosage (1) selon l'une quelconque des revendications 4 à 6, dans lequel un coin de liaison (16a) entre la partie de tête (16) et l'enveloppe (17) est biseauté.

8. Piston de dosage (1) selon l'une quelconque des revendications 4 à 7, lorsque prise en dépendance de la revendication 3, dans lequel la partie arrière (22) de l'enveloppe (17) comprend une première longueur en relief (22a) diamétralement calibrée pour servir de guide aux arêtes annulaires (19, 19') et une seconde longueur (22b) formant une marche avec la première longueur en relief (22a) et qui a un profil orienté vers le bas de manière à former un profil à encliquetage (23) destiné à interférer avec le premier évidement annulaire (13a) du corps interne (2).

9. Piston de dosage (1) selon l'une quelconque des revendications 4 à 8, lorsque prise en dépendance de la revendication 2, dans lequel la surface interne de l'enveloppe (17) orientée vers le corps interne (2) comprend une partie avant (24) et une partie arrière (25), dans lequel la partie arrière (25) a un diamètre correspondant sensiblement au diamètre de la partie arrière (10) du corps interne (2), tandis que la partie avant (24) a un plus grand diamètre, afin de créer un espace de telle sorte que les bagues élastiques (11, 11') appuient simultanément à la fois sur la surface de la marche (12) et sur la surface intérieure de l'enveloppe (17).

10. Piston de dosage (1) selon la revendication 8, dans lequel l'élément de butée en position (4) comprend une partie proximale à l'enveloppe (17) et une partie distale, la partie proximale ayant une surface interne d'un diamètre correspondant sensiblement au diamètre externe de la seconde longueur (22b) de la partie arrière (22) de l'enveloppe (17).

11. Piston de dosage (1) selon la revendication 10, dans lequel, sur la surface interne de la partie proximale de l'élément de butée en position (4), dans l'ordre en débutant à l'extrémité de ladite partie proximale, sont agencés un logement (26) pour une bague d'étanchéité (27) et une dent de mise en prise (28) avec le second évidement annulaire (13b) du corps interne (2).

12. Piston de dosage (1) selon la revendication 11, dans lequel le logement (26) possède une géométrie d'accouplement avec la bague d'étanchéité (27) ayant un profil en forme d'arc de cercle.

13. Piston de dosage (1) selon l'une quelconque des revendications 1 à 12, dans lequel le corps interne (2) est fait d'un matériau ayant un module E ≥ 2000 MPa.

14. Piston de dosage (1) selon l'une quelconque des revendications 1 à 13, dans lequel l'élément de butée en position (4) est fait d'un matériau ayant un module E ≥ 2000 MPa.

15. Piston de dosage (1) selon l'une quelconque des revendications 1 à 14, dans lequel l'élément de tête externe (3) est fait d'un matériau ayant un module E allant de 50 à 1000 MPa, de préférence sélectionné parmi des matériaux plastiques tels que le polytétrafluoroéthylène (PTFE), le polyéthylène (PE) et les polyuréthanes (PU).

16. Piston de dosage (1) selon l'une quelconque des revendications 1 à 15, dans lequel les bagues élastiques (11, 11') et les bagues d'étanchéité (14, 27) sont faites d'un matériau souple, de préférence d'un matériau ayant une dureté Shore A de 40 à 70.

17. Piston de dosage (1) selon la revendication 16, dans lequel un tel matériau souple est un élastomère de silicone.

18. Système de dosage, en particulier pour des produits alimentaires tels que des produits laitiers liquides ou semi-liquides, comprenant un piston de dosage (1) selon l'une quelconque des revendications 1 à 17.
